## Europäisches Patentamt

## European Patent Office

## Office européen des brevets

(19)

(11) Veröffentlichungsnummer: **0 158 242**
**B1**

(12) # EUROPÄISCHE PATENTSCHRIFT

(45) Veröffentlichungstag der Patentschrift:
**10.08.88**

(51) Int. Cl.⁴: **F 16 C 17/02, F 16 C 33/10**

(21) Anmeldenummer: **85103793.7**

(22) Anmeldetag: **29.03.85**

(54) Radialgleitlager.

(30) Priorität: **09.04.84 CH 1766/84**

(43) Veröffentlichungstag der Anmeldung:
**16.10.85 Patentblatt 85/42**

(45) Bekanntmachung des Hinweises auf die Patenterteilung:
**10.08.88 Patentblatt 88/32**

(84) Benannte Vertragsstaaten:
**AT BE CH DE FR GB IT LI LU NL SE**

(56) Entgegenhaltungen:
**CH-A-612 478**
**DE-A-2 624 849**
**DE-A-2 711 983**
**FR-A-951 614**
**FR-A-2 532 382**
**GB-A-380 660**
**US-A-1 940 301**
**US-A-2 625 448**

**C.F. Kettleborough: "An electrolytic tank investigation into stepped thrust-bearings", 1955,**

(73) Patentinhaber: **Arcomac S.A., Les Marais, CH- 1462 Yvonand (CH)**

(72) Erfinder: **Lehtinen, Jukka, Museokatu 34 A 11, SF- 00100 Helsinki (FI)**
Erfinder: **Karhola, Arvo, Sibeliuksenkatu 11 A 14, SF- 00250 Helsinki (FI)**
Erfinder: **Griner, Walter, Chemin de la Culturaz 42, CH- 1095 Lutry (CH)**

(74) Vertreter: **Lauer, Joachim, Hug Interlizenz AG Austrasse 44, CH- 8045 Zürich (CH)**

EP 0 158 242 B1

## Beschreibung

Die vorliegende Erfindung bezieht sich auf ein Radialgleitlager, insbesondere für rotierende Walzen, mit einem zylindrischen Innenteil, einer zu diesem koaxial angeordneten Hülse und mit einem zwischen Hülse und Innenteil angeordneten Spalt zur Aufnahme eines Schmiermittels, wobei entweder die Hülse um den feststehenden Innenteil oder der Innenteil in der feststehenden Hülse rotiert.

Solche Radialgleitlager sind in den verschiedensten Formen bekannt. Je nachdem, ob der Druck in radialer Richtung sehr groß ist, wie zum Beispiel bei den Achslagern von Schienenfahrzeugen, oder aber relativ klein, wie zum Beispiel bei rotierenden Förderwalzen, treten verschiedenartige Probleme auf, für welche schon zahlreiche Lösungen vorgeschlagen worden sind.

Die Radialgleitlager gemäß der vorliegenden Erfindung sind insbesondere für rotierende Förderwalzen und Breitstreckwalzen in der Papier- und Textilindustrie geeignet. Bei solchen Walzen bestehen zwei grundsätzliche Probleme.

Einerseits müssen sie unabhängig von ihrer normalen Betriebsgeschwindigkeit, die sehr hoch sein kann, auch während längeren leiten mit sehr niedrigen Geschwindigkeiten, d.h. mit Tangentialgeschwindigkeiten von etwa 0.5 bis 1 m/sec., laufen können, ohne daß sich die feststehenden und die rotierenden Teile berühren. Die hydrodynamischen Kräfte des Schmiermittels müssen also auch bei solch kleinen Geschwindigkeiten genügend Hebekraft entwickeln, um einen lückenlosen Schmierfilm zwischen bewegten und stationären Teilen aufrecht zu erhalten. Das Problem der relativ niedrigen Geschwindigkeiten könnte mit dem Einsatz eines hochviskosen Schmiermittels gelöst werden. Es ist aber zu bedenken, daß nicht nur die hydrodynamische Hebekraft mit der Geschwindigkeit wächst, sondern daß auch der Energiebedarf mit zunehmender Geschwindigkeit im Verhältnis zur Viskosität ansteigt. Verwendet man ein normales Schmieröl, so kommt man mit zunehmender Geschwindigkeit bald in eine Lage, in welcher der Energiebedarf für ein Walzenlager eine praktisch tolerierbare Grenze überschreitet. Aus diesem Grund sollte das Lager eine solche hydrodynamische Ausbildung haben, daß auch bei Verwendung eines sehr niedrig viskosen Schmiermittels und bei sehr kleinen Geschwindigkeiten genügend hydrodynamische Hebekräfte entwickelt werden, um einen störungsfreien Lauf zu gewährleisten. Als niedrig viskoses Schmiermittel ist bei Papiermaschinenwalzen Wasser sehr gut geeignet.

Das zweite, wichtige Problem bei der Lagerung von solchen Walzen besteht darin, daß Vibrationen auftreten können, selbst dann, wenn die rotierenden Teile ausgewuchtet sind. Solche Vibrationen können durch ein unzureichendes hydrodynamisches System verursacht werden, d.h. durch einen Schmiermittelfilm, der nicht bei allen Geschwindigkeiten eine korrekte Verteilung der notwendigen hydrodynamischen Kräfte gewährleistet. Eine Walze mit einem hydrodynamischen Radiallager muß auch bei kritischen Geschwindigkeiten ohne störende Vibrationen laufen können.

Es ist bereits bekannt, bei Axialgleitlagern, also bei Gleitlagern, die einen in Achsrichtung wirkenden Druck aushalten müssen, auf der flachen Oberfläche des stillstehenden Teils des Lagers Taschen für das Schmiermittel vorzusehen [C.F. Kettleborough, "An Electrolytic Tank Investigation into Stepped Thrust-Bearings", Proceedings of the Institution of Mechanical Engineers, 169 (1955), 679-688]. Die Probleme bei Axialgleitlagern sind jedoch wesentlich verschieden von den Problemen bei Radialgleitlagern, und Lösungen für die eine Art von Gleitlagern lassen sich nicht oder nur mit Schwierigkeiten auf die andere Art von Gleitlagern übertragen. Dies gilt insbesondere für das Verhindern von Schwingungen, die nur bei Radialgleitlagern auftreten können.

Die Erfindung geht aus von einem Radialgleitlager, insbesondere für rotierende Walzen, mit einem zylindrischen Innenteil, einer zu diesem koaxial angeordneten Hülse und mit einem zwischen Hülse und Innenteil angeordneten Spalt zur Aufnahme eines Schmiermittels, wobei entweder die Hülse um den feststehenden Innenteil oder der Innenteil in der feststehenden Hülse rotiert, und wobei die Außenfläche des Innenteils bzw. die Innenfläche der Hülse mit mehreren, über den Umfang symmetrisch verteilt angeordneten, achsparallelen Längsnuten zur Zirkulation des Schmiermittels versehen ist, von denen aus sich im wesentlichen in Umfangsrichtung verlaufende Ausnehmungen erstrecken. Ein solches Radialgleitlager ist durch die DE-A-2 624 849 bekannt geworden. Bei diesem selbstdruckerzeugenden Gleitlager soll durch die Maßnahme, daß die mit Rillen versehene Gleitfläche in Umfangsrichtung in mehrere Teilflächen unterteilt ist, und insbesondere durch die weitere Maßnahme, daß jede Teilfläche eine von einem schmiermittelbevorrateten Raum ausgehende, axial verlaufende Nut und zu beiden Seiten dieser Nut entgegengesetzt zueinander, schräg zur Umfangsrichtung geneigte, druckaufbauende Rillen aufweist, erreicht werden, daß eine im Vergleich zu bekannten Lagern der gattungsgemäßen Art erhöhte dynamische Tragfähigkeit für beide Drehrichtungen gewährleistet ist, bei gleichermaßen wirtschaftlicher Herstellungsweise.

Ein solches Radialgleitlager scheint aber für den Einsatz bei vergleichsweise niedrigen Relativgeschwindigkeiten zwischen feststehendem und umlaufendem Lagerteil ungeeignet zu sein, da sich infolge der relativ großen Gesamtquerschnitte der Schmiermittelrillen bei niedrigen Geschwindigkeiten kein tragfähiger Schmiermittelfilm aufbauen kann. Aus der genannten DE-A-2 624 849 sind auch keine Maßnahmen erkennbar, die dem zuvor angesprochenen Auftreten von unerwünschten Vibrationen entgegenwirken könnten.

Demgegenüber ist es die Aufgabe der vorliegenden Erfindung, ein Radialgleitlager der gattungsgemäßen Art so auszubilden, daß die eingangs erwähnten Nachteile vermieden bzw. die erläuterten Probleme gelöst werden. Insbesondere soll die Ausbildung des Lagers die Verwendung eines niedrig viskosen Schmiermittels erlauben, wobei trotzdem stets ein lückenloser, tragfähiger Schmiermittelfilm aufrecht erhalten wird, bei gleichzeitiger Vermeidung bzw. wirkungsvoller Unterdrückung unerwünschter Vibrationen.

Diese Erfindungsaufgaben werden bei einem gattungsgemäßen Radialgleitlager durch die im Kennzeichen des Anspruchs 1 angegebenen Merkmale gelöst. Bevorzugte Ausführungsformen und Weiterbildungen des Erfindungsgegenstandes sind in den abhängigen Ansprüchen 2 bis 10 umschrieben. Hervorzuheben ist in diesem Zusammenhang eine Ausführungsform des Radialgleitlagers, bei dem die Hülse um den feststehenden Innenteil rotiert, wobei die trapezförmigen Ausnehmungen sowie die achsparallelen Längsnuten und die ringförmigen Umfangsnuten auf der Oberfläche des stillstehenden Innenteils angeordnet sind. Damit kann ein ruhiger Lauf der Walze ohne unerwünschte Vibrationen gewährleistet werden, beispielsweise einer Breitstreckwalze, wie sie in der CH-A-612 478 beschrieben ist.

Im folgenden wird ein Ausführungsbeispiel des Erfindungsgegenstandes, unter Bezugnahme auf die beiliegenden Zeichnungen, näher erläutert. In den Zeichnungen zeigen:

Fig. 1     eine perspektivische Ansicht eines im Beispielsfall stillstehenden Innenteils des Radialgleitlagers;

Fig. 2     eine Seitenansicht des Innenteils gemäß Fig. 1;

Fig. 3     einen vergrößerten Teilschnitt durch ein Radialgleitlager, senkrecht zur Rotationsachse, und

Fig. 4     einen Ausschnitt aus der Abwicklung der Umfangsfläche (d.h. der Oberfläche) des stillstehenden Innenteils des Lagers.

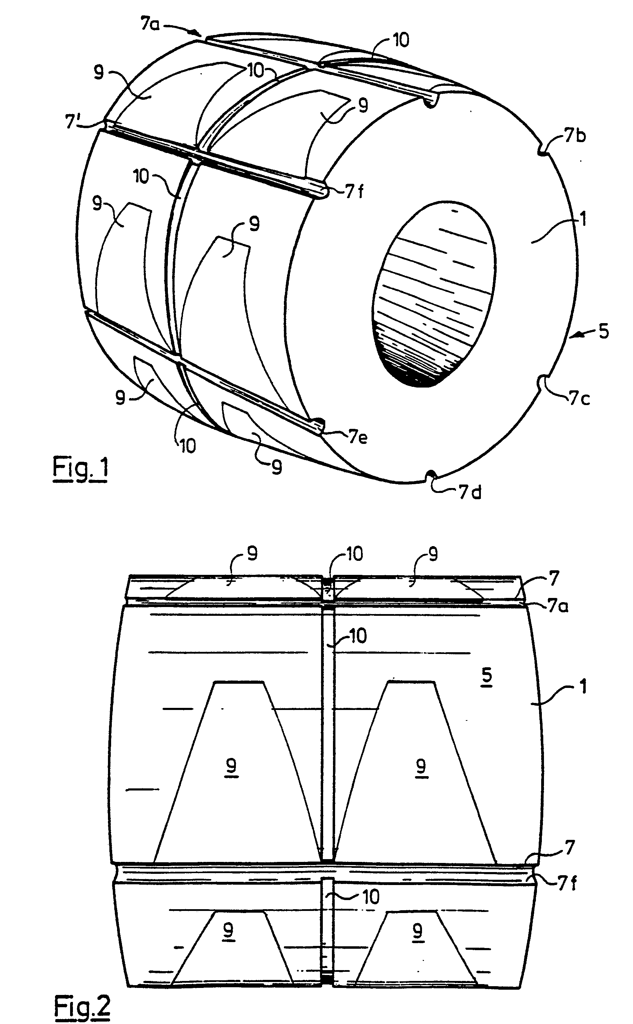

Das in den Zeichnungen dargestellte Radialgleitlager umfaßt gemäß der Darstellung in den Fig. 1 bis 3 einen feststehenden Innenteil 1 und eine koaxial dazu angeordnete, in Richtung des Pfeiles 2 rotierende Hülse 3, welche an ihrer Innenfläche mit einem zweckmäßigen Lagermaterial 4 beschichtet ist. Zwischen der inneren Oberfläche des Lagermaterials 4 und der Außenfläche 5 des Innenteils 1 befindet sich ein Spalt 6 zur Aufnahme eines Schmiermittels. Je nach Durchmesser der Hülse 3 bzw. des Innenteils 1 hat der Spalt 6 eine Breite von ungefähr 0.1 bis 0.4 mm.

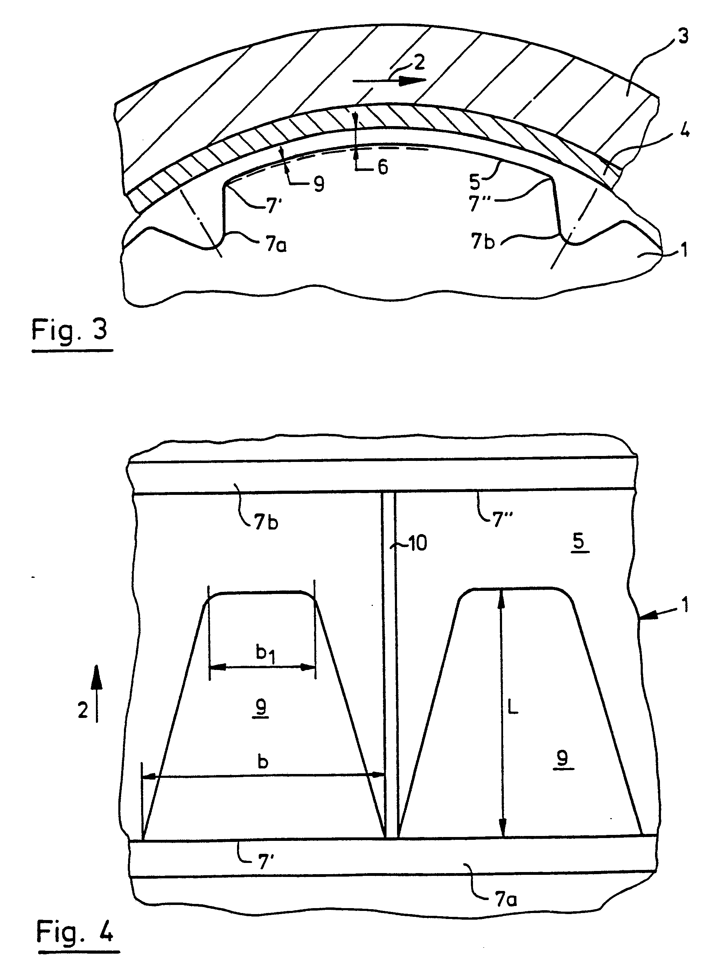

Wie aus der Fig. 1 deutlich zu entnehmen ist, ist die Außenfläche 5 des Innenteils 1 mit einer Mehrzahl von Längsnuten 7a...7f versehen, die sich parallel zur Achse des im übrigen im wesentlichen zylindrischen Innenteils 1 erstrecken. Im Beispielsfall sind sechs symmetrisch und gleichmäßig über den Umfang verteilte Längsnuten 7a bis 7f vorgesehen. In der Fig. 3 sind ausschnittsweise nur die beiden Längsnuten 7a und 7b zu sehen. Die Tiefe bzw. der Querschnitt der Längsnuten 7a...7f richtet sich nach der benötigten Durchflußmenge des Schmiermittels.

Vom Rand 7' der Längsnuten 7a...7f aus erstrecken sich trapezförmige Ausnehmungen 9, von denen in den Fig. 1, 2 und 4 je zwei zu sehen sind. Diese Ausnehmungen münden in die jeweils der Breitseite b (Fig. 4) benachbarte Nut 7a...7f und erstrecken sich, in Richtung des Pfeiles 2 in Fig. 3, gegen den Rand 7' der jeweils in Umfangsrichtung benachbarten Längsnut 7. Weiter ist insbesondere aus den Fig. 2 und 4 zu entnehmen, daß zwischen zwei benachbarten, trapezförmigen Ausnehmungen je eine ringförmige Umfangsnut 10 angeordnet ist, die sich um die Oberfläche 5 des Innenteils 1 herum erstreckt und die mit den achsparallelen Längsnuten 7a...7f kommuniziert.

Die Tiefe der Ausnehmungen 9, in Fig. 3 deutlichkeitshalber stark übertrieben dargestellt, beträgt vorzugsweise 15 bis 75 Mikron, zweckmäßigerweise etwa 35 Mikron. Jedenfalls ist deren Tiefe wesentlich geringer, sowohl als die Tiefe der ringförmigen Umfangsnuten 10 als auch diejenige der achsparallelen Längsnuten 7. Im allgemeinen wird aber die Tiefe der Längsnuten 7 und damit deren Querschnitt andererseits wesentlich größer sein als derjenige der ringförmigen Umfangsnuten 10. Im Beispielsfall mag der Innenteil 1 einen Durchmesser von ca. 15 bis 25 cm besitzen. Die Tiefe der Umfangsnuten 10 beträgt in diesem Fall etwa 1 bis 2 mm, und die Tiefe der achparallelen Längsnuten 7 ein Mehrfaches davon.

Die Höhe L des Trapezes (Fig. 4) der trapezförmigen Ausnehmungen 9 wird im allgemeinen etwa gleich sein wie die Breite b des Trapezes; als zweckmäßig hat sich ein Bereich der Abmessungsverhältnisse von etwa 0.8 bis 1.2 erwiesen. Das Verhältnis der an die Längsnuten 7 angrenzenden Breitseiten b zur Schmalseite $b_1$ der trapezförmigen Ausnehmungen 9 liegt im Bereich des Verhältnis zwischen 2.3 bis 2.6.

Als Schmiermittel für das erfindungsgemäß vorgeschlagene Radialgleitlager, das gleichzeitig auch als Kühlmittel dient, eignet sich sehr gut Wasser. Bei einer Ausführung mit feststehendem Innenteil 1 und rotierender Hülse 3 kann das Schmiermittel auf einfache Weise durch nicht näher zu diskutierende Mittel einerends in die Längsnuten 7 eingebracht und anderends daraus abgezogen werden.

Eine Walze, beispielsweise eine

Breitstreckwalze, für welche das erfindungsgemäß vorgeschlagene Radialgleitlager insbesondere geeignet ist, kann Tangeltialgeschwindigkeiten bis zu 40 m/Sek. erreichen. Bei Verwendung des erfindungsgemäß vorgeschlagenen Radialgleitlagers ist zum einen sichergestellt, daß beim Anlaufen, im Leerlauf oder im Normalbetrieb stets ein ausreichend tragfähiger Schmiermittelfilm vorhanden ist, und zum andern, daß bei all diesen Betriebszuständen keine störenden Schwingungen auftreten können.

Das erfindungsgemäß vorgeschlagene Lager, insbesondere das beispielsweise beschriebene Radialgleitlager mit feststehendem Innenteil und rotierender Hülse, besitzt eine mehrfach größere Tragfähigkeit als bekannte Radialgleitlager der gattungsgemäßen Art. Insbesondere zeichnet es sich dadurch aus, daß sehr große hydrodynamische Kräfte bei reativ geringen Drehzahlen erreicht werden.

**Patentansprüche**

1. Radialgleitlager, insbesondere für rotierende Walzen, mit einem zylindrischen Innenteil (1), einer zu diesem koaxial angeordneten Hülse (3) und mit einem zwischen Hülse (3) und Innenteil (1) angeordneten Spalt (6) zur Aufnahme eines Schmiermittels, wobei entweder die Hülse (3) um den feststehenden Innenteil (1) oder der Innenteil (1) in der feststehenden Hülse (3) rotiert, und wobei die Außenfläche (5) des Innenteils (1) bzw. die Innenfläche der Hülse (3) mit mehreren, über den Umfang symmetrisch verteilt angeordneten, achsparallelen Längsnuten (7a...7f) zur Zirkulation des Schmiermittels versehen ist, von denen aus sich im wesentlichen in Umfangsrichtung verlaufende Ausnehmungen (9) erstrecken, dadurch gekennzeichnet, daß die Ausnehmungen (9) im wesentlichen trapezförmig ausgebildet und, ausgehend von den Längsnuten (7a...7f), derart angeordnet sind, daß deren Breitseite (b) an die achsparallelen Längsnuten (7a...7f) angrenzt und zum Einströmen des Schmiermittels dient.

2. Radialgleitlager nach Anspruch 1, dadurch gekennzeichnet, daß jeweils zwischen zwei benachbarten, trapezförmigen Ausnehmungen (9) ringförmige Umfangsnuten (10) vorgesehen sind, die mit den achsparallelen Längsnuten (7a...7f) kommunizieren.

3. Radialgleitlager nach Anspruch 1 oder 2, dadurch gekennzeichnet, daß die Tiefe der Längsnuten (7a...7f) und diejenige der Quernuten (10) um ein mehrfaches größer ist als die Tiefe der trapezförmigen Ausnehmungen (9).

4. Radialgleitlager nach einem der Ansprüche 1 bis 3, dadurch gekennzeichnet, daß der Querschnitt der achsparallelen Längsnuten (7a...7f) größer ist als derjenige der ringförmigen Umfangsnuten (10).

5. Radialgleitlager nach einem der vorangehenden Ansprüche, dadurch gekennzeichnet, daß die Hülse (3) um den feststehenden Innenteil (1) rotiert und daß die trapezförmigen Ausnehmungen (9) sowie die achsparallelen Längsnuten (7a...7f) und die ringförmigen Umfangsnuten (10) auf der Oberfläche (5) des Innenteils (1) angeordnet sind.

6. Radialgleitlager nach einem der Ansprüche 1 bis 4, dadurch gekennzeichnet, daß die Hülse (3) um den feststehenden Innenteil (1) rotiert und daß die trapezförmigen Ausnehmungen (9) sowie die ringförmigen Umfangsnuten (10) auf der Innenseite der rotierenden Hülse (3) angeordnet sind, während die achsparallelen Längsnuten (7a...7f) auf der Oberfläche des Innenteils (1) angeordnet sind.

7. Radialgleitlager nach einem der Ansprüche 1 bis 5, dadurch gekennzeichnet, daß die trapezförmigen Ausnehmungen (9) sich in Laufrichtung der Hülse (9) über einen Teil deren Oberfläche ausgehend von einer achsparallelen Längsnut (7a...7f) gegen die benachbarte Längsnut (7a...7f) hin erstrecken, nicht jedoch bis zu letzterer reichen.

8. Radialgleitlager nach einem der vorangehenden Ansprüche, dadurch gekennzeichnet, daß die Tiefe der trapezförmigen Ausnehmungen (9) 15 bis 75 Mikron, vorzugsweise etwa 35 Mikron beträgt.

9. Radialgleitlager nach einem der vorangehenden Ansprüche, dadurch gekennzeichnet, daß das Verhältnis von Höhe (L) zu Breitseite (b) einer trapezförmigen Ausnehmung (9) etwa 0.8 bis 1.2 beträgt.

10. Radialgleitlager nach einem der vorangehenden Ansprüche, dadurch gekennzeichnet, daß das Verhältnis von Breitseite (b) zu Schmalseite ($b_1$) einer trapezförmigen Ausnehmung (9) etwa 2.3 bis 2.6 beträgt.

**Claims**

1. Radial friction bearing, in particular for rotating rollers, having a cylindrical inner part (1), a sleeve (3) arranged coaxial to this inner part (1), and having a gap (6), arranged between sleeve (3) and inner part (1), for accommodating a lubricant, wherein either the sleeve (3) rotates about the stationary inner part (1) or the inner part (1) rotates in the stationary sleeve (3), and wherein the outer surface (5) of the inner part (1) or the inner surface of the sleeve (3), is provided with a plurality of longitudinal grooves (7a...7f) for the circulation of the lubricant which extend parallel to the axis, are arranged so as to be symmetrically distributed over the circumference and from which recesses (9) extend outwards which run substantially in the circumferential direction, characterized in that the recesses (9) are essentially of trapezoidal configuration and, starting at the longitudinal grooves (7a...7f), are arranged in such a way that their wide side (b) adjoins the longitudinal grooves (7a...7f) extending parallel to the axis and is used for the inflow of the lubricant.

2. Radial friction bearing according to Claim 1, characterized in that annular circumferential grooves (10) are provided between each two adjacent, trapezoidal recesses (9), which circumferential grooves (10) communicate with the longitudinal grooves (7a...7f) extending parallel to the axis.

3. Radial friction bearing according to Claim 1 or 2, characterized in that the depth of the longitudinal grooves (7a...7f) and that of the transverse grooves (10) is several times greater than the depth of the trapezoidal recesses (9).

4. Radial friction bearing according to one of Claims 1 to 3, characterized in that the cross-section of the longitudinal grooves (7a...7f) extending parallel to the axis is larger than that of the annular circumferential grooves (10).

5. Radial friction bearing according to one of the preceding claims, characterized in that the sleeve (3) rotates about the stationary inner part (1), and that the trapezoidal recesses (9) as well as the longitudinal grooves (7a...7f) extending parallel to the axis and the annular circumferential grooves (10) are arranged on the surface (5) of the inner part (1).

6. Radial friction bearing according to one of Claims 1 to 4, characterized in that the sleeve (3) rotates about the stationary inner part (1), and that the trapezoidal recesses (9) as well as the annular circumferential grooves (10) are arranged on the inner side of the rotating sleeve (3), whereas the longitudinal grooves (7a...7f) extending parallel to the axis are arranged on the surface of the inner part (1).

7. Radial friction bearing according to one of Claims 1 to 5, characterized in that the trapezoidal recesses (9), starting at a longitudinal groove (7a...7f) extending parallel to the axis, extend in the running direction of the sleeve (3) over a part of its surface tovards the adjacent longitudinal groove (7a...7f) but do not reach the latter.

8. Radial friction bearing according to one of the preceding claims, characterized in that the depth of the trapezoidal recesses (9) is 15 to 75 microns, preferably about 35 microns.

9. Radial friction bearing according to one of the preceding claims, characterized in that the ratio of height (L) to vide side (b) of a trapezoidal recess (9) is about 0.8 to 1.2.

10. Radial friction bearing according to one of the preceding claims, characterized in that the ratio of wide side (b) to narrow side (b₁) of a trapezoidal recess (9) is about 2.3 to 2.6.

**Revendications**

1. Palier glissant radial, destiné en particulier à des roulettes tournantes, comportant une pièce intérieure cylindrique (1), un manchon (3) disposé coaxialement à celle-ci et une fente (6) disposée entre le manchon (3) et la pièce intérieure (1) destinée à recevoir un lubrifiant, dans lequel ou bien le manchon (3) tourne autour de la pièce intérieure (1) fixe, ou bien la pièce intérieure (1) tourne dans le manchon (3) fixe, et dans lequel la surface extérieure (5) de la pièce intérieure (1), respectivement la surface intérieure du manchon (3) est munie de plusieurs gorges longitudinales (7a à 7f) disposées en étant réparties symétriquement sur la périphérie, destinées à la circulation du lubrifiant, à partir desquelles partent des évidements (9) qui s'étendent sensiblement circonférentiellement, caractérisé par le fait que les évidements (9) ont une forme sensiblement trapézoïdale, et, en partant des gorges longitudinales (7a à 7f ), sont disposés de telle façon que leur grand côté (b) avoisine les gorges longitudinales (7a à 7f) parallèles à l'axe et sert à l'écoulement du lubrifiant.

2. Palier glissant radial selon la revendication 1, caractérisé par le fait que dans chaque cas sont prévues, entre deux évidements en forme de trapèze voisins, des gorges circonférentielles annulaires (10) qui communiquent avec les gorges longitudinales (7a à 7f ), parallèles à l'axe.

3. Palier glissant radial selon l'une des revendications 1 ou 2, caractérisé par le fait que la profondeur des gorges longitudinales (7a à 7f), et celle des gorges transversales (10) sont un multiple de la profondeur des évidements en forme de trapèze (9).

4. Palier glissant radial selon l'une quelconque des revendications 1 à 3, caractérisé par le fait que la section transversale des gorges longitudinales (7a à 7f) parallèles à l'axe est plus importante que celle des gorges circonférentielles (10).

5. Palier glissant radial selon l'une quelconque des revendications 1 à 4, caractérisé par le fait que le manchon (3) tourne autour de la pièce intérieure (1) fixe et que les évidements en forme de trapèze (9) ainsi que les gorges longitudinales (7a à 7f), parallèles à l'axe et les gorges circonférentielles (10) de forme annulaire, sont disposés sur la surface (5) de la pièce intérieure (1).

6. Palier glissant radial selon l'une quelconque des revendications 1 à 4, caractérisé par le fait que le manchon (3) tourne autour de la pièce intérieure (1) fixe et que les évidements (9) en forme de trapèze ainsi que les gorges circonférentielles (10) annulaires sont disposés du côté intérieur du manchon tournant (3), tandis que les gorges longitudinales (7a à 7f) parallèles à l'axe sont disposées sur la surface de la pièce intérieure (1).

7. Palier glissant radial selon l'une quelconque des revendications 1 à 5, caractérisé par le fait que les évidements (9) en forme de trapèze s'étendent dans la direction de rotation du manchon sur une partie de sa surface, en partant d'une gorge longitudinale (7a à 7f) parallèle à l'axe, jusqu'à la gorge longitudinale voisine (7a à 7f), sans cependant atteindre cette dernière.

8. Palier glissant radial selon l'une quelconque des revendications précédentes, caractérisé par le fait que la profondeur des évidements (9) en forme de trapèze est de 15 à 75 microns, de préférence égale à 35 microns environ.

9. Palier glissant radial selon l'une quelconque des revendications précédentes, caractérisé par le fait que le rapport entre la hauteur (L) et le grand côté (b) de l'évidement (9) en forme de trapèze est d'environ 0,8 à 1,2.

10. Palier glissant radial selon l'une quelconque des revendications précédentes, caractérisé par le fait que le rapport entre le grand côté (b) et le petit côté ($b_1$) d'un évidement (9) en forme de trapèze est d'environ 2,3 à 2,6.

Fig.1

Fig.2

Fig. 3

Fig. 4